# EUROPÄISCHE PATENTSCHRIFT

(11) **EP 1 334 372 B1**
(45) Veröffentlichungstag und Bekanntmachung des Hinweises auf die Patenterteilung: **06.03.2013**
(21) Anmeldenummer: 01992901.7
(22) Anmeldetag: 30.10.2001
(51) Int. Cl.: G01S 5/02, G01S 5/12

(54) **POSITIONSBESTIMMUNGSVERFAHREN UND -VORRICHTUNG**
METHOD AND DEVICE FOR DETERMINING POSITION
PROCEDE ET DISPOSITIF PERMETTANT DE DETERMINER UNE POSITION

(30) Priorität: 31.10.2000 DE 10053959
(43) Veröffentlichungstag der Anmeldung: 13.08.2003
(73) Patentinhaber: abatec group AG, 4844 Regau (AT)
(72) Erfinder: NIEDERNDORFER, Friedrich, A-4840 Pilsbach (AT)
(74) Vertreter: Jacoby, Georg
(86) Internationale Anmeldenummer: PCT/EP2001/012535
(87) Internationale Veröffentlichungsnummer: WO 2002/037134

(56) Entgegenhaltungen:
- EP-A- 0 528 627
- EP-A- 1 014 105
- WO-A-99/41723
- GB-A- 2 250 154
- US-A- 5 317 323
- US-A- 6 034 622

## Beschreibung

Die Erfindung betrifft ein Verfahren zum Bestimmen der Position eines Objektes, bei dem vom Objekt ein Zeitstoppsignal an wenigstens zwei, räumlich voneinander beabstandete Empfangsstationen gesendet wird, bei jeder Empfangsstation ein Zeitmeßsignal erzeugt wird, wobei die Zeitmeßsignale untereinander synchronisiert werden, bei jeder Empfangsstation bei Empfang des Zeitstoppsignals aus dem Zeitmeßsignal eine Ankunftszeit für das empfangene Zeitstoppsignal bestimmt wird, und aus den Positionen der Empfangsstationen und den Ankunftszeiten die Position des Objektes bestimmt wird. Die Erfindung betrifft ferner eine entsprechende Vorrichtung zum Bestimmen der Position eines Objektes.

So ist es bei vielen Anwendungen wünschenswert, die Position eines Objektes möglichst genau bestimmen zu können. Beispielsweise können im Sportbereich zwecks Analyse weitere aufschlußreiche Daten aus dem zeitlichen Spielverlauf der Positionen von Sportlern gezogen werden. Im Motorsport können über exakte Messungen der Fahrzeugpositionen im zeitlichen Verlauf die Beschleunigung, Geschwindigkeit, das Bremsverhalten, etc. abgeleitet werden. Im Skisport ist weiterhin beispielsweise ein unmittelbarer Vergleich zweier aufeinanderfolgender Läufer möglich, wenn zu einem bestimmten Zeitpunkt die exakte Position angegeben wird. Ganz allgemein können im Mannschaftssport aus den Positionsbestimmungen für jeden Spieler weitere Spielanalysen für die Vorbereitung auf zukünftige Spiele abgeleitet werden. Dies gilt ebenfalls für die Aufgabe der Schiedsrichter, der Jury und sonstiger Unparteiischer, die aus den exakten Positionsdaten genauere und fairere Entscheidungen treffen können.

Darüber hinaus gibt es aber auch ein weites Anwendungsfeld beispielsweise bei der Feuerbekämpfung, bei der jeder Feuerwehrmann genau lokalisiert und bei gefährlichen Situationen unmittelbar gewarnt oder gerettet werden kann. Ähnliches gilt auch für Überwachungsdienste, Sicherheitsservices, etc.

Jedoch auch bei der Produktfertigung hat die Positionsbestimmung einen großen Anwendungsbereich, indem nämlich der Produktionsprozeß überwacht und verfolgt werden kann. Dabei kann beispielsweise jede Bewegung eines Roboters so überwacht werden, daß Fehlbewegungen unmittelbar erfaßt werden können. Als letztes Beispiel dieser nicht abschließenden Aufzählung sei auf das Transportwesen verwiesen, bei dem die Positionen der Transportfahrzeuge überwacht werden können.

Es sind bereits mehrere Verfahren und Vorrichtungen zur Positionsbestimmung bekannt. So wird bei der DE 3 206 004 A1 die Position des Objektes mittels einer Radar-Richtantenne ermittelt, die aus der Laufzeit des Radarsignals die Entfernung berechnet. Hierzu wird von einer Referenzstation ein Radarsignal an das Objekt gesendet, von dem dortigen Empfänger empfangen und von einem zugehörigen Sender wieder zurückgestrahlt und schließlich bei der Referenzstation erneut empfangen. Die Laufzeit des Signals entspricht somit im wesentlichen der doppelten Entfernung zwischen Referenzstation und Objekt. Zusätzlich ist eine optische Winkelmeßeinrichtung vorgesehen, mit der die Winkellage des Objektes bezüglich der Referenzstation erfaßt werden kann.

Das obige Beispiel aus dem Stand der Technik steht stellvertretend für eine Vielzahl ähnlicher Meßverfahren, bei denen von einer festen Station ein Signal zu dem beweglichen Objekt gesendet, von diesem zu der festen Station zurückgesendet und anschließend aus der Laufzeit des Signals die Entfernung des Objektes zu der Station bestimmt wird. Anstelle des obigen Winkelgebers werden gelegentlich auch mehrere Stationen eingesetzt, bei denen die Entfernung zum beweglichen Objekt über das gleiche Verfahren bestimmt wird. Aus den Schnittpunkten der sich dabei ergebenden Kugeloberflächen läßt sich bei Verwendung von wenigstens drei Stationen die Position eines Objektes im Raum bestimmen. Nachteilig hierbei ist, daß das Meßsignal die Strecke zwischen Referenzstation und Objekt zweimal zurücklegen muß und die Antwortzeit der Elektronik bei dem Objekt, d.h. das Zurücksenden des Signals nach Empfang des Signals, eine stabile Konstante für alle Referenzstationen darstellen muß, damit die Position möglichst genau bestimmt werden kann.

Die DE 196 47 098 A1 offenbart ein gattungsgemäße Verfahren und eine gattungsgemäße Vorrichtung zum Bestimmen der Position eines Objektes. Das in der Position zu bestimmende Objekt sendet ein Zeitstoppsignal zusammen mit einem den Sendezeitpunkt anzeigenden aufmodulierten Zeitsignal an die ortsfesten Empfänger. Das Objekt teilt also mit diesem Zeitsignal den Empfängern den Zeitpunkt mit, zu dem es das Zeitstoppsignal gesendet hat. Bei den Empfängern laufen jeweils untereinander synchronisierte Zeituhren. Bei Empfang des Zeitstoppsignals stoppt jeder Empfänger seine Zeituhr und erhält eine spezifische Empfangszeit für das Zeitstoppsignal. Anschließend bildet jeder Empfänger die Differenz aus seinem gestoppten Empfangszeitpunkt und aus dem vom aufmodulierten Zeitsignal angegebenen Sendezeitpunkt und multipliziert diese Differenz mit der Ausbreitungsgeschwindigkeit des Zeitstoppsignals. Dies liefert einen Abstand des Objektes vom jeweiligen Empfänger. Bei einer dreidimensionalen Positionsbestimmung wird die Objektposition wiederum aus den Schnittpunkten von Kugeln mit den Radien der von drei Empfängern gemessenen Abständen bestimmt. In der gattungsgemäßen Druckschrift ist dieses auf einer reinen Laufzeitdifferenz beruhende Meßprinzip dahingehend weiterentwickelt worden, daß eine ggf. zwischen den Uhren der Empfänger und der des Objektes vorliegende Zeitververschiebung kompensiert wird. Für diese Kompensation wird ein zusätzlicher Empfänger eingesetzt, der die gleiche Messung durchführt. Insgesamt wird ein Gleichungssystem erhalten, aus dem die unbekannte Zeitverschiebung eliminiert werden kann. Nachteilig hierbei ist, daß stets der Sendezeitpunkt des Zeitstoppsignals bekannt sein muß.

Eine gattungsgemäße Vorrichtung und ein gattungsgemäßes Verfahren sind aus der EP 0 528 627 A2 bekannt. Dabei sendet der am Objekt angeordnete Sender das Zeitstoppsignal asynchron aus, d.h. ohne jegliche Synchronisation mit den übrigen Empfangsstationen.

Die GB 2 250 154 A zeigt ein Verfahren zur Bestimmung der Höhe eines Flugzeuges in einer Einflugschneise. Ein am Flugzeug angebrachter Sender sendet kontinuierlich ein SSR-Signal aus, das von einer Master-Empfangsstation und vier Slave-Empfangsstationen empfangen wird. Alle Empfangsstationen messen die Ankunftszeiten des SSR-Signals. Die Master-Empfangsstation bestimmt die Flugzeughöhe aus den vier Differenzzeiten zwischen ihrer Ankunftszeit und den vier Ankunftszeiten bei den Slave-Empfangsstationen.

Es ist Aufgabe der Erfindung, die bekannten Positionsbestimmungsverfahren und Vorrichtungen dahingehend weiterzuentwickeln, daß eine genauere und stabilere Positionsbestimmung möglich ist.

Die Erfindung erreicht dieses Ziel jeweils mit den Gegenständen der Ansprüche 1 und 16. Bevorzugte Ausführungsbeispiele der Erfindung sind in den Unteransprüchen beschrieben.

Danach wird die Position des Objektes aus den paarweisen Differenzen von jeweils zwei Ankunftszeiten zweier Empfangsstationen bestimmt. Entsprechendes gilt auch für die gattungsgemäße Vorrichtung.

Somit berechnet die Erfindung keine Laufzeitunterschiede des Zeitstoppsignals vom Objekt zur jeweiligen Empfangsstation, da der Sendezeitpunkt des Zeitstoppsignals nicht bekannt ist. Bei der Erfindung laufen lediglich bei jeder Empfangsstation Uhren, die untereinander synchronisiert sind und bei Ankunft des Zeitstoppsignals die entsprechende Empfangszeit ausgeben. Um nunmehr allein aus den Empfangszeiten (ohne Kenntnis des Sendezeitpunktes) die Objektposition zu bestimmen, werden paarweise Differenzen von jeweils zwei Empfangszeiten zweier Empfangsstationen gebildet und aus den paarweisen Differenzen die Objektposition ermittelt.

Dies soll nachfolgend kurz am Beispiel einer eindimensionalen Positionsbestimmung erläutert werden. Im eindimensionalen Fall sollen sich der Einfachheit halber das Ob-jekt und wenigstens zwei Empfangsstationen beispielsweise auf einer endlosen, geraden Schiene befinden. In jeder Empfangsstation läuft eine Uhr, wobei beide Uhren untereinander synchronisiert sind, d.h. beispielsweise die gleiche Zeit anzeigen. Zu einem bestimmten Zeitpunkt (siehe unten), sendet das Objekt das Zeitstoppsignal (das kein aufmoduliertes Zeitsignal enthält). Bei Empfang dieses Signals gibt jede Empfangsstation die entsprechende Empfangszeit aus. Anschließend wird die Objektposition lediglich anhand der Differenz der beiden gemessenen Empfangszeiten bestimmt. Ist die Differenz beispielsweise Null (d.h., beide Empfangszeiten sind gleich), so befindet sich das Objekt genau zwischen den beiden Empfangsstationen. Seine Position wird so aus den beiden bekannten Positionen der Empfangsstationen bestimmt. Wenn die Differenz der beiden Empfangszeiten ungleich Null ist, kann zusammen mit der Information der Ausbreitungsgeschwindigkeit des Zeitstoppsignals die Objektposition bzgl. der beiden Empfangsstation-Positionen ebenfalls nach einfachen, hier nicht näher darzulegenden physikalischen Formeln bestimmt werden.

Der Begriff "paarweise Differenzen" bedeutet am Beispiel von drei Empfangsstationen A, B und C (für die Positionsbestimmung eines Objektes auf einer allgemeinen Raumfläche, siehe unten), daß drei paarweise Differenzen von jeweils zwei Ankunftszeiten bestimmt werden, nämlich die Differenzen der Ankunftszeiten der Empfangsstationen A und B, B und C sowie C und A.

Die Zeitmeßsignale bei den Empfangsstationen können beispielsweise über einen hochgenauen Zeitgeber (Atomuhr, etc.) erzeugt werden, die untereinander über ein empfangenes Synchronisationssignal synchronisiert werden. Dabei ist nicht erforderlich, daß die einzelnen Zeitgeber zu jedem Zeitpunkt die gleiche Zeit anzeigen, es muß jedoch der Zeitversatz zwischen den einzelnen Zeitgebern bekannt sein. Bei dem Zeitstoppsignal handelt es sich vorzugsweise um ein Hochfrequenzsignal, das sich im freien Raum im wesentlichen in alle Richtungen gleichmäßig und gleich schnell ausbreitet. Das könnte aber ebenfalls auch ein Lichtsignal im sichtbaren oder unsichtbaren Bereich (z.B. Infrarot) sein.

Für die Bestimmung der Position eines Objektes auf einer eindimensionalen Kurve werden wenigstens zwei Empfangsstationen verwendet und für jede weitere Dimension wenigstens eine weitere von den anderen Empfangsstationen beabstandete Empfangsstation. Soll die Position eines Objektes beispielsweise nur auf einer Kurve (eindimensionale Messung) bestimmt werden, so genügt es, zwei Empfangsstationen zu verwenden und die Position des Objektes aus den beiden Ankunftszeiten des Zeitstoppsignals bei den beiden Empfangsstationen abzuleiten. Für jede weitere Dimension der Positionsbestimmung ist eine weitere Empfangsstation erforderlich. Die Position des Objektes auf einer allgemeinen Raumfläche kann durch mindestens drei Empfangsstationen bestimmt werden (zweidimensionale Messung), während für die Positionsbestimmung im Raum mindestens vier Empfangsstationen benötigt werden, die nicht in einer Ebene liegen dürfen.

Bevorzugt wird für eine Bestimmung der Position eines Objektes in einer Ebene, in der auch die Empfangsstationen liegen, oder auf einer gekrümmten Raumkurve, die in einer Ebene mit den Empfangsstationen liegt, die Position aus den Schnittpunkten von Hyperbeln bestimmt, wobei jeweils eine Hyperbel zwei Empfangsstationen zugeordnet ist, die derart ausgerichtet und angeordnet ist, daß von jedem Punkt auf der Hyperbel die Differenz der beiden Entfernungen jeweils von dem Punkt zu den beiden zugeordneten Empfangsstationen immer gleich der paarweisen Differenz der beiden Ankunftszeiten bei den beiden Empfangsstationen entspricht. Dies stellt vorteilhaft ein einfach zu lösendes mathematisches Gleichungssystem von Hyperbelschnittpunkten dar. Für eine dreidimensionale Positionsbestimmung oder eine Bestimmung der Position auf einer allgemeinen Raumfläche wird die Position bevorzugt aus den Schnittpunkten von Hyperboloiden bestimmt, wobei jeweils ein Hyperboloid zwei Empfangsstationen zugeordnet ist, der derart ausgerichtet und angeordnet ist, daß von einem Punkt auf der Hyperboloiden die Differenz der beiden Entfernungen jeweils zu den beiden zugeordneten Empfangsstationen immer gleich der paarweisen Differenz der beiden Ankunftszeiten bei den beiden Empfangsstationen entspricht. Die Positionsbestimmung mittels Rotationshyperbeln betrifft also lediglich den speziellen Fall, daß das Objekt und die Empfangsstationen in einer Ebene liegen, während für den allgemeineren Fall Rotationshyperboloide verwendet werden.

Zusätzlich werden bevorzugt zu der mindestens erforderlichen Anzahl an Empfangsstationen weitere Empfangsstationen verwendet, die so zueinander angeordnet sind, daß bei Abschattungen in den Übertragungswegen von dem Objekt zu einzelnen Empfangsstationen immer wenigstens die mindestens erforderliche Anzahl an empfangsfähigen Empfangsstationen vorliegt. Bei einem fest vorgegebenen flächigen Terrain ist es beispielsweise nicht immer möglich, drei Empfangsstationen so anzuordnen, daß von jedem Punkt auf dem Terrain das Zeitstoppsignal ungehindert zu jeder Empfangsstation übertragen werden kann. Häufig befinden sich Gebäude oder sonstige Gegenstände in den Übertragungswegen, welche die Positionsbestimmung zunichte machen können. Insofern kann von vornherein eine größere Anzahl an Empfangsstationen vorgesehen werden, so daß von jedem. Punkt auf dem Terrain immer an wenigstens drei Empfangsstationen (bei der Positionsbestimmung im Raum an wenigstens vier Empfangsstationen) ungehindert gesendet werden kann.

Besonders bevorzugt werden weitere Empfangsstationen verwendet und die Position aus allen Ankunftszeiten mittels statistischer Auswertungen bestimmt. Bei einer höheren Anzahl als der mindestens erforderlichen Anzahl an Empfangsstationen kann die Genauigkeit der Positionsbestimmung über statistische Auswertungen der erhaltenen Daten vorteilhaft verbessert werden. Solche statistische Auswertungen können beispielsweise Mittelwertbildungen, Varianzberechnungen und Verwerfen von außerhalb des Varianzbereiches liegender Meßdaten, etc. umfassen.

Bevorzugt werden bei der statistischen Auswertung über Plausibilitätstests ausgewählte Ankunftszeiten bei der Positionsbestimmung verworfen. Vorteilhaft können die Ankunftszeiten vorab darauf untersucht werden, ob sie realistisch zu erwartenden Ankunftszeiten entsprechen. Ankunftszeiten, die beispielsweise sehr viel später als die Mehrheit liegen, können vorab verworfen werden und tragen somit nicht zur Positionsbestimmung bei.

Bevorzugt können die Empfangsstationen in ihrer Position verfahren werden, um beispielsweise die Position eines Objektes besser verfolgen zu können. Die Position der Empfangsstation kann so beispielsweise abhängig von der bestimmten Position des Objektes geändert werden.

Besonders bevorzugt werden die Positionen der verfahrbaren Empfangsstationen über ein Satelliten-Positionierungssystem, wie GPS bestimmt. So bietet sich die GPS-Positionsbestimmung der verfahrbaren Empfangsstationen insbesondere dann an, wenn die GPS-Genauigkeit durch Korrekturdaten erhöht wird (wenn sich beispielsweise eine GPS-Referenzstation im System befindet und die Bewegung der verfahrbaren Empfangsstationen sehr langsam ist). Alternativ könnte die Position der verfahrbaren Empfangsstationen auch mittels des erfindungsgemäßen Verfahrens bestimmt werden, indem die verfahrbare Empfangsstation ebenfalls mit den entsprechenden technischen Mitteln wie das in der Position zu bestimmende Objekt ausgestattet wird.

Erfindungsgemäß wird den Empfangsstationen vor jeder Positionsbestimmung ein Synchronisationssignal zum Synchronisieren der Zeitmeßsignale übertragen. Dieses Synchronisationssignal wird über Funk übertragen. Die Empfangsstationen starten bei Empfang des Synchronisationssignals einen Zeitzähler zum Erzeugen des Zeitmeßsignals. Bei der erforderlichen hohen Genauigkeit in der Bestimmung der Ankunftszeit wird mit dieser Maßnahme vorteilhaft sichergestellt, daß die Zeitzähler bei den einzelnen Empfangsstationen nicht zu stark auseinanderlaufen (beispielsweise kann dieses Synchronisationssignal periodisch in kurzen Zeitabständen gesendet werden). Zum weiteren Erhöhen der Genauigkeit wird der Zeitraum zwischen der Synchronisation und dem Empfang des Zeitstoppsignals dadurch gesteuert (insbesondere kurz gehalten werden), indem dem Objekt ein Auslösesignal zum Auslösen des Sendens des Zeitstoppsignals übertragen wird. Damit kann ein ungefährer Zeitrahmen zwischen Synchronisation und Messung festgelegt werden, wobei nach wie vor der genaue Zeitpunkt des Aussendens des Zeitstoppsignals vom Objekt unbekannt ist und auch nicht für die Positionsbestimmung benötigt wird. Das Synchronisationssignal wird eine bestimmte Zeit vor dem Auslösesignal übertragen. Hiermit wird vorteilhaft sichergestellt, daß - wie oben ausgeführt - die Zeitzähler zwar lediglich eine kurze Zeit lang zählen und somit nicht zu stark auseinanderlaufen können, aber dennoch gewährleistet wird, daß das Synchronisationssignal bei jeder Empfangsstation vor dem Zeitstoppsignal eintrifft..

Bevorzugt wird das Zeitstoppsignal von dem Objekt innerhalb eines definierten Zeitfensters nach Empfang des Auslösesignals gesendet. Diese Maßnahme trägt noch einmal zur Genauigkeitsverbesserung bei (vgl. oben) und gestattet außerdem, bei den Plausibilitätstests zum Verwerfen ausgewählter Ankunftszeiten diejenigen Ankunftszeiten auszuwählen, welche gestört oder sonstwie verfälscht sind. Bevorzugt wird das Synchronisationssignal und/oder das Auslösesignal von einer der Empfangsstationen übertragen. Alternativ können die beiden Signale auch von einer separaten Steuerungsstation übertragen werden, die räumlich günstig positioniert ist. Die Position dieser separaten Steuerungsstation kann so gewählt sein, daß insbesondere bei Übertragung des Synchronisationssignals über Funk jede Empfangsstation ungehindert erreicht werden kann. Als noch weitere Alternative wird das Synchronisationssignal bevorzugt von einem Objekt nach Empfang eines entsprechenden Auslösesignals übertragen, dessen Position zuvor bestimmt wurde. Insbesondere bei mehreren Objekten kann eines dieser Objekte, dessen Position bekannt ist, das Synchronisationssignal übertragen.

Bei der Positionsbestimmung werden unterschiedliche Laufzeiten des Synchronisationssignals zu den einzelnen Empfangsstationen berücksichtigt.

Zum Erhöhen der Genauigkeit der Positionsbestimmung umfaßt das Zeitstoppsignal bevorzugt ein Impulsgruppe mit scharfer Impulsantwort oder ein Signal mit charakteristischen Eigenschaften. So gilt es, bei dem eintreffenden Signal einen zeitlich genau definierten Punkt festzulegen, an dem die Zeitzähler bei den Empfangsstationen gestoppt werden und die Ankunftszeit ausgegeben wird. Ideal wäre also ein eingehendes Signal mit einer unendlich steilen Flanke, was sich bei Hochfrequenzsignalen in der Realität aufgrund der begrenzten zur Verfügung stehenden Übertragungsbandbreite jedoch nur schwer verwirklichen läßt. Hier hat jedoch die Verwendung von Lichtimpulsen als Zeitstoppsignal Vorteile, da genügend Bandbreite für eine relativ steile Flanke zur Verfügung steht.

Bevorzugt umfaßt das Auslösesignal einen Code, mit dem ein bestimmtes Objekt unter mehreren Objekten zum Senden des Zeitstoppsignals ausgewählt wird, dessen Position anschließend bestimmt werden soll. Das erfindungsgemäße Positionsbestimmungsverfahren eignet sich auch zum Bestimmen der Position mehrerer Objekte über die gleichen Empfangsstationen, wobei die Positionen der einzelnen Objekte entweder nacheinander bestimmt werden, indem lediglich ein bestimmtes Objekt zum Senden des Zeitstoppsignals ausgewählt wird, oder aber die Positionen mehrerer Objekte im wesentlichen gleichzeitig bestimmt werden, indem alle Objekte gleichzeitig unterschiedliche Zeitstoppsignale senden, die von den Empfangsstationen wiederum den einzelnen Objekten zugeordnet werden können. Der Empfang dieser mehreren Zeitstoppsignale bei den Empfangsstationen kann dabei im Multiplexverfahren erfolgen.

Bevorzugt werden von dem Objekt weitere Daten zu einer der Empfangsstationen und/oder der Steuerungsstation gesendet. So können beispielsweise weitere Informationen über das Objekt an eine zentrale Station zum Auswerten dieser Information übertragen werden. Abhängig von dem Objekt kann diese Information beispielsweise den Blutdruck, Hautwiderstand (Schweiß), Herzfrequenz bei Personen (Sportlern), Feldstärkesignale bei Feldstärkemessungen für den Handysmog, Geschwindigkeit, Öltemperatur, usw. beim Auto-Motorsport, etc. umfassen.

Umgekehrt können dem Objekt bevorzugt weitere Daten von einer der Empfangsstationen und/oder der Steuerungsstation gesendet werden. So können beispielsweise Sportlern akustische Informationssignale, oder autonomen Geländeerforschungs-Fahrzeugen weitere Steuerungssignale übersendet werden.

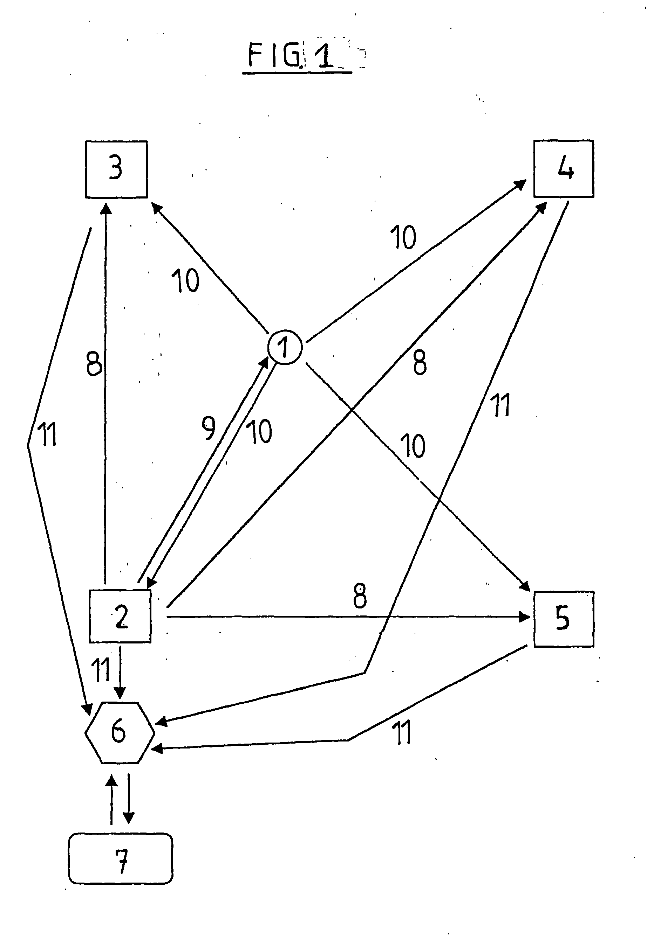

Weitere Vorteile und Merkmale der Erfindung werden nunmehr anhand eines bevorzugten Ausführungsbeispiels mit Bezug auf die beigefügte Zeichnung näher erläutert. In der Zeichnung zeigt die einzige Figur in schematischer Ansicht eine Anordnung aus einem in der Position, zu bestimmenden Objekt und der hierzu erforderlichen Empfangsstationen sowie symbolisch die unterschiedlichen zwischen Objekt und Empfangsstationen gesendeten Signale.

In der Figur sind schematisch das Objekt 1, vier Empfangsstationen 2-5, ein Masterrechner 6 sowie ein Server 7 dargestellt. Die Empfangsstationen 2-5 befinden sich bevorzugt an festen, bekannten Standorten. Sie können beispielsweise an den Eckpunkten, einer "gedachten" Pyramide angeordnet sein. In dem gezeigten Ausführungsbeispiel soll sich das Objekt 1 innerhalb des von den vier Empfangsstationen 2-5 aufgestellten Vierecks bewegen können. Selbstverständlich kann sich das Objekt 1 auch außerhalb dieses Vierecks oder allgemein im Raum bewegen, solange es sich im Empfangsbereich der Empfangsstationen 2-5 befindet. Mit der speziellen Anordnung der Empfangsstationen 2-5 in den Ecken eines Vierecks läßt sich die Position des Objektes 1 in einer Ebene, also in zwei Dimensionen leicht bestimmen, auch wenn der direkte Übertragungsweg zwischen dem Objekt 1 und einer der Empfangsstationen 2-5 versperrt sein sollte. Diese spezielle Bestimmung der Position in lediglich zwei Dimensionen ist jedoch nicht einschränkend zu verstehen.

Die Empfangsstation 2 ist als Master-Empfangsstation ausgestaltet, von der aus ein noch näher zu erläuterndes Auslösesignal 9 an das Objekt 1 und ein Synchronisationssignal 8 jeweils an die drei anderen Empfangsstationen 3-5 übertragen wird.

Zum Übertragen und Verarbeiten der einzelnen Signale weist die Empfangsstation 2 eine nicht gesondert dargestellte Synchronisationssignal-Sendeeinrichtung zum Übertragen des Synchronisationssignals 8 und eine Auslösesignal-Sendeeinrichtung zum Senden des Auslösesignals 9 auf. Das Objekt 1 weist eine ebenfalls nicht gesondert dargestellte Sendeeinrichtung zum Senden des Zeitstoppsignals 10, eine nicht gesondert dargestellte Auslösesignal-Empfangseinrichtung zum Empfangen des Auslösesignals 9 und ein mit der Sendeeinrichtung und der Auslösesignal-Empfangseinrichtung gekoppeltes Auslösemittel. Die drei Empfangsstationen 3-5 weisen jeweils eine nicht gesondert dargestellte Synchronisationssignal-Empfangseinrichtung zum Empfangen des Synchronisationssignals 8 auf. Im übrigen enthalten alle vier Empfangsstationen 2-5 einen nicht gesondert dargestellten Zeitzähler zum Erzeugen eines Zeitmeßsignals, eine Empfangseinrichtung zum Empfangen des Zeitstoppsignals 10, ein mit dem Zeitzähler und der Empfangseinrichtung gekoppeltes Bestimmungsmittel zum Bestimmen der Ankunftszeit des Zeitstoppsignals 10 bei dessen Ankunft bei der jeweiligen Empfangsstation. Die Synchronisationssignal-Sendeeinrichtung bei der Empfangsstation 2 und die Synchronisationssignal-Empfangseinrichtung bei den drei Empfangsstationen 3-5 können so ausgestaltet sein, daß sie das Synchronisationssignal 8 über Funk, über Kabel, über Leicht, etc. senden und empfangen können. Die Auslösesignal-Sendeeinrichtung bei der Empfangsstation 2, die Auslösesignal-Empfangseinrichtung bei dem Objekt 1 sowie die Sendeeinrichtung bei dem Objekt 1 und die Empfangseinrichtungen bei den vier Empfangsstationen 2-5 können beispielsweise auf den ISM-Bändern (ISM = Industrial Scientific & Medical) senden und auf gleicher Frequenz empfangen, beispielsweise über ein Multiplexverfahren.

Nachfolgend wird das Verfahren zur Positionsbestimmung des Objektes 1 detaillierter beschrieben. In einem ersten Schritt sendet die als Master-Referenzstation ausgebildete Empfangsstation 2 ein Synchronisationssignal 8 an die drei weiteren Empfangsstationen 3-5. Alternativ kann dieses Synchronisationssignal 8 auch von einer unabhängigen Station gesendet werden, welche beispielsweise keine Empfangseinrichtung zum Empfangen des Zeitstoppsignals 10 und keinen Zeitzähler zum Erzeugen des Zeitmeßsignals aufweist. Diese Alternative wird zur Zeit bevorzugt. Als eine weitere Alternative kann das Synchronisationssignal auch von einem gegebenenfalls bezüglich der drei Empfangsstationen 3-5 günstig angeordneten nicht dargestellten Transceiver gesendet werden, der erst das von der Empfangsstation 2 ausgesendete Synchronisationssignal 8 empfängt, bei Empfang und Dekodierung dieses Synchronisationssignals 8 erkennt, das er zum Aussenden eines weiteren Synchronisationssignals 8 angerufen ist und daraufhin das Synchronisationssignal 8 an die drei Empfangsstationen 3-5 aussendet. Vorteilhaft kann hiermit eine günstigere Position dieses Transceivers zu den drei Empfangsstationen 3-5 ausgewählt werden. Dieser nicht dargestellte Transceiver könnte beispielsweise auch an einigen Objekten 1 vorgesehen sein, wobei jeweils nur derjenige Transceiver eines Objektes von der Empfangsstation 2 aufgerufen wird, dessen Position kurz zuvor bestimmt worden ist. So ist es nämlich erforderlich, die Entfernung des Transceivers zu den drei Empfangsstationen 3-5 zu kennen, um die unterschiedlichen Laufzeiten des Synchronisationssignals 8 zu diesen Empfangsstationen 3-5 nachträglich kompensieren zu können.

Die Synchronisationssignal-Empfangseinrichtungen in den drei Empfangsstationen 3-5 empfangen nunmehr das Synchronisationssignal 8 nach der entfernungsabhängigen Laufzeit und Starten daraufhin unmittelbar ihre Zeitzähler zum Erzeugen des Zeitmeßsignals. Nach einem fest vorgegebenen Zeitintervall, das sich beispielsweise nach der längstmöglichen Laufzeit eines Synchronisationssignals 8 zu der entferntesten Empfangsstation 3, 4 oder 5 bemißt, sendet die Empfangsstation 2 nunmehr über die Auslösesignal-Sendeeinrichtung das Auslösesignal 9 an die Auslösesignal-Empfangseinrichtung des Objektes 1. Das Objekt 1 empfängt dieses Auslösesignal 9 ebenfalls nach einer entfernungsabhängigen Laufzeit und überprüft anhand des in dem Auslösesignal 9 enthaltenen Codes, ob es angesprochen wurde. Im gesamten System können sich beispielsweise sehr viele in ihrer Position zu bestimmende Objekte 1 befinden, wobei sich die Länge des in dem Auslösesignal 9 enthaltenen Objektcodewortes nach der Anzahl dieser Objekte 1 bestimmt. Umgekehrt kann die maximale Objektanzahl auch von vornherein beispielsweise zu 65.000 festgelegt werden. Im letzteren Fall genügt eine Code-Wortlänge von 16 Bit.

Das angesprochene Objekt 1 sendet nunmehr ebenfalls innerhalb eines definierten Zeitfensters, welches von dem Auslösemittel festgelegt wird, ein Zeitstoppsignal 10 aus. Dieses Zeitstoppsignal 10 wird ebenfalls nach einer jeweiligen entfernungsabhängigen Laufzeit von den vier Empfangsstationen 2-5 empfangen, wobei dort direkt nach Empfang dieses Zeitstoppsignals 10 die Zeitzähler gestoppt werden. Die bei dem Zeitzähler gestoppte Zeit wird über das in den Empfangsstationen 2-5 befindliche Bestimmungsmittel zum Bestimmen einer Ankunftszeit 11 ausgelesen. Die so bestimmte Ankunftszeit 11 wird anschließend dem Masterrechner 6 übertragen. Der Masterrechner 6 kann beispielsweise auch direkt bei der Empfangsstation 2 vorgesehen sein. Dabei können für die Übertragung der Ankunftszeit 11 diejenigen Sendekanäle verwendet werden, die zum Senden und Empfangen des Synchronisationssignals 8 zwischen den Empfangsstationen 2-5 herangezogen werden. Hierzu können die Synchronisationssignal-Sendeeinrichtung und die Synchronisationsignal-Empfangseinrichtung bei der Empfangsstation 2 bzw. den Emmpfangsstationen 3-5 als Transceiver ausgebildet sein, welche Signale in beiden Richtungen senden und empfangen können.

Insgesamt entspricht die bei den einzelnen Empfangsstationen 2-5 gemessene Ankunftszeit 11 also der Differenzzeit bei der jeweiligen Ankunft des Synchronisationssignals 8 bei der jeweiligen Empfangsstation 2-5 (bei der Empfangsstation 2 wird der Zeitzähler beispielsweise unmittelbar nach Aussenden des Synchronisationssignals 8 gestartet) und dem Zeitpunkt der Ankunft des Zeitstoppsignals 10 bei den vier Empfangsstationen 2-5. Diese Differenzzeit sollte - abhängig von der erforderlichen Genauigkeit der Positionsbestimmung - beispielsweise mit einer Genauigkeit etwa im Nanosekundenbereich ermittelt werden können, um eine vernünftige Positionsauflösung im Meterbereich zu erzielen. So entspricht eine Meßgenauigkeit der Ankünfszeit von einer Nanosekunde einem Fehler von 30 cm in beiden Richtungen. Um diesen Fehler noch zu verringern, müßte die Auflösung in den Pikosekundenbereich verbessert werden.

Der mit den Empfangsstationen 2-5 gekoppelte Masterrechner 6 berechnet nunmehr die Position des Objektes 1 anhand der vier Ankunftszeiten 11 (Differenzzeit zwischen Ankunft des Zeitstoppsignals 10 und Ankunft des Synchronisationssignals 8) folgendermaßen: Da die Position der vier Empfangsstationen 2-5 bekannt ist und somit auch die Laufzeit des Synchronisationssignals 8 zwischen der Empfangsstation 2 und den drei Empfangsstationen 3-5 kann nun die tatsächliche Ankunftszeit des Zeitsignals 10 bei den drei Empfangsstationen 3-5 berechnet werden. Hierzu wird von den drei Ankunftszeiten 11 bei diesen drei Empfangsstationen 3-5 jeweils die Laufzeit des Synchronisationssignals 8 von der Empfangsstation 2 zu der jeweiligen Empfangsstation 3-5 subtrahiert.

Aus den um die Laufzeiten korrigierten Ankunftszeiten läßt sich die Position des Objektes 1 nunmehr wie folgt bestimmen: Es wird zuerst die Menge aller Paare unter den Empfangsstationen 2-5 gebildet und für jedes Paar die Differenz der beiden korrigierten Ankunftszeiten bei den zugehörigen Empfangsstationen berechnet. Genauer gesagt, werden für das dargestellte Ausführungsbeispiel die folgenden Paare gebildet: 2, 3 und 3, 4 und 4, 5 und 5, 2 und 2, 4 und 3, 5. Für das Paar 2, 3 wird anschließend die Differenz der beiden korrigierten Ankunftszeiten bei den Empfangsstationen 2 und 3 gebildet. Aus dieser Differenz der korrigierten Ankunftszeiten kann mathematisch geschlossen werden, daß sich das Objekt 1 auf der Schale eines zweischaligen Rotationshyperboloiden befindet, in dessen beiden Brennpunkten (für jede Schale ein Brennpunkt) jeweils die beiden Empfangsstationen 2 und 3 angeordnet sind. Aus dem Vorzeichen der Differenz der beiden korrigierten Ankunftszeiten kann weiterhin geschlossen werden, welche Schale dieses zweischaligen Rotationshyperboloides auszuwählen ist. So ist die Hyperbel mathematisch gerade so definiert, daß von jedem Punkt auf der Hyperbelschale die Differenz der beiden Entfernungen zu den beiden Brennpunkten immer eine Konstante ist, also gerade die Differenz der beiden korrigierten Ankunftszeiten.

Die in diesem dargestellten Ausführungsbeispiel so bestimmten sechs Rotationshyperboloide werden anschließend zum Schnitt gebracht, um die Position des Objektes 1 zu ermitteln. Wie sich aus geometrischen Überlegungen leicht ableiten läßt, werden für die Bestimmung der Position des Objektes 1 in einer Dimension wenigstens zwei Empfangsstationen, in zwei Dimensionen wenigstens drei Empfangsstationen und in drei Dimensionen wenigstens vier Empfangsstationen benötigt, um aus den Schnitten der einzelnen Rotationshyperboloiden einen Schnittpunkt in dem jeweiligen Dimensionsbereich zu erhalten.

Aus den nachfolgend dargelegten Gründen wird jedoch eine höhere Anzahl an Empfangsstationen eingesetzt:
- Häufig sind die direkten Übertragungswege für das Zeitstoppsignal 10 zwischen dem Objekt 1 und einer der Empfangsstationen 2-5 durch andere Objekte oder Gegenstände abgeschattet, so daß die bei der entsprechenden Empfangsstation gemessene Ankunftszeit 11 nicht dem direkten Übertragungsweg entspricht oder schlimmstenfalls die Übertragung komplett gestört ist. In diesem Fall kann der Masterrechner 6 über Plausibilitätstests prüfen, ob die jeweilige Ankunftszeit sinnvoll ist oder.nicht. Beispielsweise können Ankunftszeiten, die über einen gewissem Höchstwert liegen, als unzulässig verworfen werden.
- Insgesamt kann die Genauigkeit der Positionsbestimmung durch eine statistische Mittelung mehrerer ermittelter Schnittpunkte erhöht werden. Hierzu werden in dem dargestellten Ausführungsbeispiel zum Beispiel drei Dreiergruppen an Empfangsstationen 2-5 gebildet, 2, 3, 4 und 3, 4, 5 und 5, 2, 3 und für jede Dreiergruppe ein Schnittpunkt ermittelt. Die so erhaltenen drei Schnittpunkte der drei Dreiergruppen werden anschließend beispielsweise gemittelt.
- Für die numerische Bestimmung des Schnittpunktes der einzelnen Rotationshyperboloiden ist es zweckmäßig, wenn die Tangentialflächen der Rotationshyperboloide im Schnittpunkt möglichst orthogonal zueinander stehen (Vermeidung von schleifenden Schnitten). Dann lassen sich numerisch ziemlich genau die Schnittpunkte ermitteln. Hierzu ist es jedoch erforderlich, die Empfangsstationen 2-5 entsprechend anzuordnen. Da dies bei den meisten zu überwachenden Terrains häufig nicht möglich sein wird, kann die Anzahl der Empfangsstationen erhöht werden, so daß abhängig von der Position des Objektes 1 sich immer die mindestens erforderliche.Anzahl an Empfangsstationen findet, die eine möglichst optimale Konstellation der Rotationshyperboloiden zueinander liefert.

Der Masterrechner 6 kann nunmehr den zeitlichen Ablauf der Positionen des Objektes 1 in einer Datenbank des Servers 7 speichern und diese gespeicherten Daten anschließend für spezielle Anwenderprogramme zur Verfügung stellen. So können beispielsweise im Sportbereich die Spielerbewegungen auf dem Spielfeld analysiert werden, etc. Zusätzlich können Datenverbindungen zwischen den Empfangsstationen 2-5 und dem Objekt 1 über entsprechende nicht gesondert dargestellte Daten-Sendeeinrichtungen und Daten-Empfangseinrichtungen aufgebaut werden. Hierüber können entweder dem Objekt 1 bestimmte Informationen zur Steuerung (bei Robotern, etc.) übersandt werden oder von dem Objekt 1 zusätzlich aufgenommene Informationen dem Masterrechner 6 übermittelt werden. Solche Informationen können beispielsweise die Pulsfrequenz, der Blutdruck, der Hautwiderstand von Personenobjekten, ein Feldstärkesignal für zu vermessenden Handy-Smog, ein Geschwindigkeitssignal, Information über Weitere Cockpit-Daten im Auto-Motor-Sport, etc..

Der Zeitzähler kann beispielsweise ein TDC (Time Digital Converter) mit einer Auflösung im Pikosekundenbereich sein, der in Antwort auf ein entsprechendes Start-Stopp-Signal ein genaues Zeitdifferenzsignal liefert. Die Sendeeinrichtung des Objektes 1 kann so ausgebildet sein, daß sie als Zeitstoppsignal 10 eine Impulsfolge mit scharfer Impulsantwort oder allgemein ein Signal mit charakteristischen Eigenschaften aussendet, die einen in der Zeit möglichst eindeutig definierten Punkt liefert, an dem die Zeitzähler in den einzelnen Empfangsstationen 2-5 gestoppt werden sollen. Grundsätzlich ist für eine scharfe Impulsantwort ein breites Frequenzband erforderlich, da ein in der Zeit scharf abgegrenztes Ereignis lediglich aus einer Überlagerung von vielen Wellenzügen mit verschiedenen Frequenzen gebildet werden kann. Bei der zur Verfügung stehenden Bandbreite beispielsweise der ISM-Bänder ist hier sicherlich ein Kompromiß erforderlich. Wie bereits erwähnt, könnten zum Vermeiden dieser technischen Grenzen bei bestimmten Anwendungen insbesondere Lichtsignale zum Einsatz kommen, da diese eine sehr hohe Bandbreite haben.

Die Datenübertragung zwischen den Empfangsstationen 2-5 und dem Masterrechner kann über einen bidirektionalen Datenkanal stattfinden, wie einer Kabelverbindung, einer Lichtübertragungsstrecke oder einer gängigen Funkverbindung (Wavelan, Hiperlan, etc.). Der Datenaustausch zwischen dem Masterrechner 6 und.dem Server 7 kann über eine herkömmliche Kabelverbindung (zum Beispiel Fast Ethernet, etc.) erfolgen.

## Patentansprüche

1. Verfahren zum Bestimmen der Position eines Objektes (1), bei welchem:
a) für die Bestimmung der Position eines Objektes (1) auf einer eindimensionalen Kurve von dem Objekt (1) ein Zeitstoppsignal (10) an wenigstens zwei, räumlich voneinander beabstandete Empfangsstationen (2-5) gesendet wird, und für jede weitere Dimension wenigstens eine weitere von den anderen Empfangsstationen (2-5) beabstandete Empfangsstation (2-5),
b) bei jeder Empfangsstation (2-5) ein Zeitmeßsignal erzeugt wird, wobei die Zeitmeßsignale untereinander synchronisiert werden,
c) bei jeder Empfangsstation (2-5) bei Empfang des Zeitstoppsignals (10) aus dem Zeitmeßsignal eine Ankunftszeit (11) für das empfangene Zeitstopp-Signal (10) bestimmt wird, und
d) aus den Positionen der Empfangsstationen (2-5) und den paarweisen Differenzen von jeweils zwei Ankunftszeiten (11) zweier Empfangsstationen (2-5) die Position des Objektes (1) bestimmt wird, vor jeder Positionsbestimmung
e) dem Objekt (1) ein Auslösesignal (9) zum Auslösen des Sendens des Zeitstoppsignals (10) übertragen wird, wobei das Objekt (1) das Zeitstoppsignal (10) innerhalb eines definierten Zeitfensters nach Empfang des Auslösesignals (9) aussendet,
f) den Empfangsstationen (2-5) vor jeder Positionsbestimmung ein Synchronisationssignal (8) als Funksignal von einer Synchronisationssignal-Sendeeinrichtung übertragen wird, wobei das Synchronisationssignal (8) eine bestimmte Zeit vor dem Auslösesignal (99 übertragen wird, und
g) die Ankunftszeit bei der jeweiligen Empfangsstation (2-5) als Zeitdifferenz zwischen der Ankunft des Synchronisationssignals (8) von der Synchronisationssignal-Sendeeinrichtung (2) und der Ankunft des Zeitstoppsignals vom Objekt (1) bestimmt wird, wobei für die Bestimmung der Ankunftszeit bei der jeweiligen Empfangsstation (2-5) jeweils die Laufzeit des Synchronisationssignals (8) von der Synchronisationssignal-Sendeeinrichtung (2) zu der jeweiligen Empfangsstation (2-5) berücksichtigt wird, und die Laufzeiten aus den bekannten Positionen der Empfangsstationen (2-5) und der Synchronisationssignal-Sendeeinrichtung (2) bestimmt werden.

2. Verfahren nach Anspruch 1, bei welchem für die Bestimmung der Position des Objektes (1) in einer Ebene, in der auch die Empfangsstationen (2-5) liegen, oder auf einer gekrümmten Raumkurve, die in einer Ebene mit den Empfangsstationen (2-5) liegt, die Position aus den Schnittpunkten von Hyperbeln bestimmt wird, wobei jeweils eine Hyperbel zwei Empfangsstationen (2-5) zugeordnet ist, die derart ausgerichtet und angeordnet ist, daß von jedem Punkt auf der Hyperbel die Differenz der beiden Entfernungen jeweils von dem Punkt zu den beiden zugeordneten Empfangsstationen (2-5) immer gleich der paarweisen Differenz der beiden Ankunftszeiten (11) bei den beiden Empfangsstationen (2-5) entspricht.

3. Verfahren nach Anspruch 1, bei welchem für eine dreidimensionale Positionsbestimmung oder eine Bestimmung der Position auf einer allgemeinen Raumfläche die Position aus den Schnittpunkten von Hyperboloiden bestimmt wird, wobei jeweils ein Hyperboloid zwei Empfangsstationen (2-5) zugeordnet ist, der derart ausgerichtet und angeordnet ist, daß von einem Punkt auf dem Hyperboloiden die Differenz der beiden Entfernungen jeweils zu den beiden zugeordneten Empfangsstationen (2-5) immer gleich der paarweisen Differenz der beiden Ankunftszeiten (11) bei den beiden Empfangsstationen (2-5) entspricht.

4. Verfahren nach einem der vorhergehenden Ansprüche, bei welchem zusätzlich zu der mindestens erforderlichen Anzahl an Empfangsstationen (2-5) weitere Empfangsstationen (2-5) verwendet werden, die so zueinander angeordnet sind, daß bei Abschattungen in den Übertragungswegen von dem Objekt (1) zu einzelnen Empfangsstationen (2-5) immer wenigstens die mindestens erforderliche Anzahl an empfangsfähigen Empfangsstationen (2-5) vorliegt.

5. Verfahren nach Anspruch 4, bei welchem ferner weitere Empfangsstationen (2-5) verwendet werden und die Position aus allen Ankunftszeiten (11) mittels statistischer Auswertungen bestimmt wird.

6. Verfahren nach Anspruch 5, bei welchem bei der statistischen Auswertung über Plausibilitätstest ausgewählte Ankunftszeiten (11) für die Positionsbestimmung verworfen werden.

7. Verfahren nach einem der vorhergehenden Ansprüche, bei welchem die Empfangsstationen (2-5) in ihrer Position verfahren werden.

8. Verfahren nach Anspruch 7, bei welchem die Positionen der verfahrbaren Empfangsstationen (2-5) über ein Satelitten-Positionierungssystem, wie GPS bestimmt werden.

9. Verfahren nach einem der vorhergehenden Ansprüche, bei welchem das Synchronisationssignal (8) und/oder das Auslösesignal (9) von einer separaten Steuerungsstation übertragen wird, die räumlich günstig positioniert ist.

10. Verfahren nach einem der vorhergehenden Ansprüche, bei welchem das Synchronisationssignal (8) und/oder das Auslösesignal (9) von einer der Empfangsstationen (2-5) übertragen wird.

11. Verfahren nach einem der vorhergehenden Ansprüche, bei welchem das Synchronisationssignal (8) von einem Objekt (1) nach Empfang eines entsprechenden Auslösesignals (9) übertragen wird, dessen Position zuvor bestimmt wurde.

12. Verfahren nach einem der vorhergehenden Ansprüche, bei welchem das Zeitstoppsignal (10) eine Impulsgruppe mit scharfer Impulsantwort oder ein Signal mit charakteristischer Eigenschaft umfaßt.

13. Verfahren nach einem der vorhergehenden Ansprüche, bei welchem das Auslösesignal (9) einen Code umfaßt, mit dem ein bestimmtes Objekt (1) unter mehreren Objekten zum Senden des Zeitstoppsignals (10) ausgewählt wird, dessen Position anschließend bestimmt werden soll.

14. Verfahren nach einem der vorhergehenden Ansprüche, bei welchem von dem Objekt (1) weitere Daten zu einer der Empfangsstationen (2-5) und/oder der Steuerungsstation gesendet werden.

15. Verfahren nach einem der vorhergehenden Ansprüche, bei welchem dem Objekt (1) weitere Daten von einer der Empfangsstationen (2-5) und/oder der Steuerungsstation gesendet werden.

16. Anordnung zum Bestimmen der Position eines Objektes (1), mit:
a) einer an dem Objekt (1) angeordneten Sendeeinrichtung zum Senden eines Zeitstoppsignals (10);
b) für die Bestimmung der Position eines Objektes (1) auf einer eindimensionalen Kurve wenigstens zwei räumlich von einander beabstandeten Empfangsstationen (2-5) zum Empfangen des von der Sendeeinrichtung gesendeten Zeitstoppsignals (10), wobei für jede weitere Dimension wenigstens eine weitere von den anderen Empfangsstationen (2-5) beabstandete Empfangsstation (2-5) vorgesehen ist, und jede Empfangstation (2-5) folgendes aufweist:
b1) einen Zeitzähler zum Erzeugen eines Zeitmeßsignals, die untereinander synchronisiert werden, und
b2) ein Bestimmungsmittel zum Bestimmen einer Ankunftszeit (11) aus dem Zeitmeßsignal bei Ankunft des Zeitstoppsignals (10); und
c) einer Berechnungseinrichtung (6) zum Bestimmen der Position des Objektes (1) aus den Positionen der Empfangsstationen (2-5) und den paarweisen Differenzen von jeweils zwei Ankunftszeiten (11) zweier Empfangsstationen (2-5),
**gekennzeichnet durch**
d) eine Synchronisationsignal-Sendeeinrichtung zum Senden eines Synchronisationssignals (8) an die Empfangsstationen (2-5), mit dem die Zeitzähler zum Erzeugen der Zeitmeßsignale synchronisiert werden,
e) eine Auslösesignal-Sendeeinrichtung zum Senden eines Auslösesignals (9) und eine Steuerungseinrichtung zum Steuern der Auslösesignal-Sendeeinrichtung und der Synchronisationssignal-Sendeeinrichtung, wobei das Steuerungsmittel die Auslösesignal-Sendeeinrichtung und die Synchronisationssignal-Sendeeinrichtung derart steuert, daß das Synchronisationssignal (8) eine bestimmte Zeit vor dem Auslösesignal (9) gesendet wird,
e) eine bei den Empfangsstationen (2-5) vorgesehene Synchronisationssignal-Empfangseinrichtung zum Empfangen des Synchronisationssignals (8) sowie ein dort vorgesehenes Startmittel zum Starten der Erzeugung des Zeitmeßsignals bei Empfang des Synchronisationssignals (8), und
f) einer am Objekt (1) vorgesehenen Auslösesignal-Empfangseinrichtung zum Empfangen des Auslösesignals (9) sowie eines dort vorgesehenen Auslösemittels zum Auslösen des Sendens des Zeitstoppsignals (10) innerhalb eines definierten Zeitfensters nach Empfang des Auslösesignals (9),
g) wobei die Berechnungseinrichtung (6) ferner derart ausgestaltet ist, dass sie für die Bestimmung der Ankunftszeit bei der jeweiligen Empfangsstation (2-5) jeweils die Laufzeit des Synchronisationssignals (8) von der Synchronisationssignal-Sendeeinrichtung (2) zu der jeweiligen Empfangsstation (2-5) berücksichtigt, und die Laufzeiten aus den bekannten Positionen der Empfangsstationen (2-5) und der Synchronisationssignal-Sendeeinrichtung (2) bestimmt.

17. Anordnung nach Anspruch 16, bei welcher die Berechnungseinrichtung (6) für eine zweidimensionale Positionsbestimmung derart ausgestaltet ist, daß sie für die Bestimmung der Position des Objektes (1) in einer Ebene, in der auch die Empfangsstationen (2-5) liegen, oder auf einer gekrümmten Raumkurve, die in einer Ebene mit den Empfangsstationen (2-5) liegt, die Position aus den Schnittpunkten von Hyperbeln bestimmt, wobei jeweils eine Hyperbel zwei Empfangsstationen (2-5) zugeordnet ist, die derart ausgerichtet und angeordnet ist, daß von jedem Punkt auf der Hyperbel die Differenz der beiden Entfernungen jeweils von dem Punkt zu den beiden zugeordneten Empfangsstationen (2-5) immer gleich der paarweisen Differenz der beiden Ankunftszeiten (11) bei den beiden Empfangsstationen (2-5) entspricht.

18. Anordnung nach Anspruch 16, bei welcher die Berechnungseinrichtung (6) für eine dreidimensionale Positionsbestimmung oder eine Bestimmung der Position auf einer allgemeinen Raumfläche derart ausgestaltet ist, daß sie die Position aus den Schnittpunkten von Hyperboloiden bestimmt, wobei jeweils ein Hyperboloid zwei Empfangsstationen (2-5) zugeordnet ist, der derart ausgerichtet und angeordnet ist, daß von einem Punkt auf dem Hyperboloiden die Differenz der beiden Entfernungen jeweils zu den beiden zugeordneten Empfangsstationen (2-5) immer gleich der paarweisen Differenz der beiden Ankunftszeiten (11) bei den beiden Empfangsstationen (2-5) entspricht.

19. Anordnung nach einem der Ansprüche 16 bis 18, welche ferner derart ausgestaltet ist, daß zusätzlich zu der mindestens erforderlichen Anzahl an Empfangsstationen (2-5) weitere Empfangsstationen (2-5) vorgesehen sind, die so zueinander angeordnet sind, daß bei Abschattungen in den Übertragungswegen von dem Objekt (1) zu einzelnen Empfangsstationen (2-5) immer wenigstens die mindestens erforderliche Anzahl an empfangsfähigen Empfangsstationen (2-5) vorliegt.

20. Anordnung nach Anspruch 19, welche ferner derart ausgestaltet ist, daß noch weitere Empfangsstationen (2-5) vorgesehen sind, wobei die Berechnungseinrichtung (6) derart ausgestaltet ist, daß sie die Position aus allen Ankunftszeiten (11) mittels statistischer Auswertungen bestimmt.

21. Anordnung nach Anspruch 20, bei welcher die Berechnungseinrichtung (6) derart ausgestaltet ist, daß sie ausgewählte Ankunftszeiten (11) für die Positionsbestimmung bei der statistischen Auswertung über Plausibilitätstest verwirft.

22. Anordnung nach einem der Ansprüche 16 bis 21, welche in ihrer Position verfahrbare Empfangsstationen (2-5) umfaßt.

23. Anordnung nach Anspruch 22, bei welcher die verfahrbaren Empfangsstationen (2-5) Satelliten-Positionierungssysteme, wie GPS-Empfänger aufweisen, mit deren Hilfe ihre Position bestimmt wird.

24. Anordnung nach einem der Ansprüche 16 bis 23, bei welcher eine separate Steuerungsstation vorgesehen ist, welche die Auslösesignal-Sendeeinrichtung, die Synchronisationssignal-Sendeeinrichtung, die Steuerungseinrichtung und die Berechnungseinrichtung umfaßt.

25. Anordnung nach einem der Ansprüche 16 bis 23, bei welcher eine der Empfangsstationen (2-5) die Auslösesignal-Sendeeinrichtung, die Synchronisationssignal-Übertragungseinrichtung und die Steuerungseinrichtung umfaßt.

26. Anordnung nach einem der Ansprüche 16 bis 23, bei welcher eines von mehreren Objekten (1) die Synchronisationssignal-Übertragungseinrichtung umfaßt.

27. Anordnung nach einem der Ansprüche 16 bis 26, bei welcher die Sendeeinrichtung einen Impulsformer zum Ausbilden des Zeitstoppsignals (10) als eine Impulsgruppe mit scharfer Impulsantwort oder als ein Signal mit charakteristischer Eigenschaft aufweist.

28. Anordnung nach einem der Ansprüche 16 bis 27, bei welcher die Auslösesignal-Sendeeinrichtung ferner ein Codiermittel und die Auslösesignal-Empfangseinrichtung ein Decodiermittel zum Codieren/Decodieren eines im Auslösesignal (9) enthaltenen Codes umfaßt, mit dem ein bestimmtes Objekt (1) unter mehreren Objekten zum Senden des Zeitstoppsignals (10) ausgewählt wird, dessen Position anschließend bestimmt werden soll.

29. Anordnung nach einem der Ansprüche 16 bis 28, bei welcher das Objekt (1) ferner eine erste Daten-Sendeeinrichtung zum Senden weiterer Daten vom Objekt (1) zu einer an einer der Empfangsstationen (2-5) vorgesehenen ersten Daten-Empfangseinrichtung umfaßt.

30. Anordnung nach einem der Ansprüche 16 bis 29, bei welcher eine der Empfangsstationen (2-5) ferner eine zweite Daten-Sendeeinrichtung zum Senden weiterer Daten an eine beim Objekt (1) vorgesehenen zweiten Daten-Empfangseinrichtung umfaßt.

## Claims

1. A method of determining the position of an article (1) in which
a) for determining the position of an article (1) on a one-dimensional curve from the article (1) a time stop signal (10) is sent to at least two receiving stations (2 to 5) which are at a spatial distance from one another, and for each further dimension at least one further receiving station (2 to 5) which is at a distance from the other receiving stations (2 to 5),
b) a time measurement signal is generated at each receiving station (2 to 5), wherein the time measurement signals are synchronized amongst one another,
c) an arrival time (11) for the time stop signal (10) received is determined from the time measurement signal at each receiving station (2 to 5) upon receipt of the time stop signal (10), and
d) the position of the article (1) is determined from the positions of the receiving stations (2 to 5) and the pair-wise differences of two arrival times (11) of two receiving stations (2 to 5) in each case, before each determination of the position
e) a trigger signal (9) for triggering the sending of the time stop signal (10) is transmitted to the article (1), wherein the article (1) emits the time stop signal (10) within a defined time window after the receipt of the trigger signal (9),
f) a synchronization signal (8) is transmitted in the form of a radio signal from a synchronization signal sending device to the receiving stations (2 to 5) before each determination of the position, wherein the synchronization signal (8) is transmitted at a specified time before the trigger signal (99, and
g) the arrival time in the respective receiving station (2 to 5) is determined as the time difference between the arrival of the synchronization signal (8) from the synchronization signal sending device (2) and the arrival of the time stop signal from the article (1), wherein for determining the arrival time in the respective receiving station (2 to 5) the run time of the synchronization signal (8) from the synchronization signal sending device (2) to the respective receiving station (2 to 5) is taken into consideration in each case, and the run times are determined from the known positions of the receiving stations (2 to 5) and the synchronization signal sending device (2).

2. A method according to claim 1, in which, for determining the position of the article (1) in a plane in which the receiving stations (2 to 5) are also situated or on a curving spatial curve which is situated in one plane with the receiving stations (2 to 5), the position is determined from the points of intersection of hyperbolae, wherein one hyperbola is associated with two receiving stations (2 to 5) in each case, which is orientated and arranged in such a way that from each point on the hyperbola the difference of the two distances from the point to the two associated receiving stations (2 to 5) in each case always corresponds equally to the pair-wise difference of the two arrival times (11) in the two receiving stations (2 to 5).

3. A method according to claim 1, in which for a three-dimensional determination of the position or a determination of the position on a general spatial face the position is determined from the points of intersection of hyperboloids, wherein one hyperboloid is associated with two receiving stations (2 to 5) in each case, which is orientated and arranged in such a way that from one point on the hyperboloids the difference of the two distances to the two associated receiving stations (2 to 5) in each case always corresponds equally to the pair-wise difference of the two arrival times (11) in the two receiving stations (2 to 5).

4. A method according to any one of the preceding claims, in which, in addition to the at least necessary number of receiving stations (2 to 5), further receiving stations (2 to 5) are used which are arranged with respect to one another in such a way that in the event of shadowing in the transmission paths from the article (1) to individual receiving stations (2 to 5) at least the at least necessary number of receiving stations (2 to 5) capable of receiving are always present.

5. A method according to claim 4, in which further receiving stations (2 to 5) are additionally used and the position is determined from all the arrival times (11) by means of statistical evaluation.

6. A method according to claim 5, in which in the statistical evaluation selected arrival times (11) for determining the position are discarded by way of a plausibility test.

7. A method according to any one of the preceding claims, in which the receiving stations (2 to 5) are moved in their position.

8. A method according to claim 7, in which the positions of the movable receiving stations (2 to 5) are determined by way of a satellite positioning system, such as GPS.

9. A method according to any one of the preceding claims, in which the synchronization signal (8) and/or the trigger signal (9) is transmitted by a separate control station which is positioned in a spatially advantageous manner.

10. A method according to any one of the preceding claims, in which the synchronization signal (8) and/or the trigger signal (9) is transmitted by one of the receiving stations (2 to 5).

11. A method according to any one of the preceding claims, in which the synchronization signal (8) is transmitted by an article (1) after the receipt of a corresponding trigger signal (9), the position of which has been determined beforehand.

12. A method according to any one of the preceding claims, in which the time stop signal (10) comprises a pulse group with a focused pulse response or a signal with a characteristic property.

13. A method according to any one of the preceding claims, in which the trigger signal (9) comprises a code by which a specified article (1) is selected amongst a plurality of articles in order to send the time stop signal (10), the position of which is to be determined subsequently.

14. A method according to any one of the preceding claims, in which further data are sent from the article (1) to one of the receiving stations (2 to 5) and/or the control station.

15. A method according to any one of the preceding claims, in which further data are sent to the article (1) by one of the receiving stations (2 to 5) and/or the control station.

16. An arrangement for determining the position of an article (1), with
a) a sending device arranged on the article (1) for sending a time stop signal (10);
b) for determining the position of an article (1) on a one-dimensional curve at least two receiving stations (2 to 5) which are at a spatial distance from one another for receiving the time stop signal (10) sent by the sending device, wherein at least one further receiving station (2 to 5) which is at a distance from the other receiving stations (2 to 5) is provided for each further dimension, and each receiving station (2 to 5) has the following:
b1) a time counter for generating a time measurement signal, which time counters are synchronized with one another, and
b2) a determining means for determining an arrival time (11) from the time measurement signal upon the arrival of the time stop signal (10); and
c) a calculation device (6) for determining the position of the article (1) from the positions of the receiving stations (2 to 5) and the pair-wise differences of two arrival times (11) of two receiving stations (2 to 5) in each case,
**characterized by**
d) a synchronization signal sending device for sending a synchronization signal (8) to the receiving stations (2 to 5), by which synchronization signal sending device the time counters are synchronized in order to generate the time measurement signals,
e) a trigger signal sending device for sending a trigger signal (9) and a control device for controlling the trigger signal sending device and the synchronization signal sending device, wherein the control means controls the trigger signal sending device and the synchronization signal sending device in such a way that the synchronization signal (8) is sent at a specified time before the trigger signal (9),
e) a synchronization signal receiving device provided at the receiving stations (2 to 5) for receiving the synchronization signal (8) and a starting means provided there for starting the generation of the time measurement signal upon receipt of the synchronization signal (8), and
f) a trigger signal receiving device provided on the article (1) for receiving the trigger signal (9) and a trigger means provided there for triggering the sending of the time stop signal (10) within a defined time window after the receipt of the trigger signal (9),
g) wherein the calculation device (6) is additionally designed in such a way that it takes into consideration the run time of the synchronization signal (8) from the synchronization signal sending device (2) to the respective receiving station (2 to 5) in each case in order to determine the arrival time in the respective receiving station (2 to 5), and determines the run times from the known positions of the receiving stations (2 to 5) and the synchronization signal sending device (2).

17. An arrangement according to claim 16, in which the calculation device (6) is designed for a two-dimensional determination of the position in such a way that, for determining the position of the article (1) in a plane in which the receiving stations (2 to 5) are also situated or on a curving spatial curve which is situated in one plane with the receiving stations (2 to 5), it determines the position from the points of intersection of hyperbolae, wherein one hyperbola is associated with two receiving stations (2 to 5) in each case, which is orientated and arranged in such a way that from each point on the hyperbola the difference of the two distances from the point to the two associated receiving stations (2 to 5) in each case always corresponds equally to the pair-wise difference of the two arrival times (11) in the two receiving stations (2 to 5).

18. An arrangement according to claim 16, in which the calculation device (6) is designed for a three-dimensional determination of the position or a determination of the position on a general spatial face in such a way that it determines the position from the points of intersection of hyperboloids, wherein one hyperboloid is associated with two receiving stations (2 to 5) in each case, which is orientated and arranged in such a way that from one point on the hyperboloid the difference of the two distances to the two associated receiving stations (2 to 5) in each case always corresponds equally to the pair-wise difference of the two arrival times (11) in the two receiving stations (2 to 5).

19. An arrangement according to any one of claims 16 to 18, which is further designed in such a way that, in addition to the at least necessary number of receiving stations (2 to 5), further receiving stations (2 to 5) are provided which are arranged with respect to one another in such a way that in the event of shadowing in the transmission paths from the article (1) to individual receiving stations (2 to 5) at least the at least necessary number of receiving stations (2 to 5) capable of receiving are always present.

20. An arrangement according to claim 19, which is further designed in such a way that further receiving stations (2 to 5) are additionally provided, wherein the calculation device (6) is designed in such a way that it determines the position from all the arrival times (11) by means of statistical evaluation.

21. An arrangement according to claim 20, in which the calculation device (6) is designed in such a way that it discards selected arrival times (11) for determining the position in the statistical evaluation by way of a plausibility test.

22. An arrangement according to any one of claims 16 to 21, which comprises receiving stations (2 to 5) capable of being moved in their position.

23. An arrangement according to claim 22, in which the receiving stations (2 to 5) capable of being moved have satellite positioning systems, such as GPS receivers, with the aid of which their position is determined.

24. An arrangement according to any one of claims 16 to 23, in which a separate control station is provided which comprises the trigger signal sending device, the synchronization signal sending device, the control device and the calculation device.

25. An arrangement according to any one of claims 16 to 23, in which one of the receiving stations (2 to 5) comprises the trigger signal sending device, the synchronization signal transmission device and the control device.

26. An arrangement according to any one of claims 16 to 23, in which one of a plurality of articles (1) comprises the synchronization signal transmission device.

27. An arrangement according to any one of claims 16 to 26, in which the sending device has a pulse former for forming the time stop signal (10) in the form of a pulse group with a focused pulse response or in the form of a signal with a characteristic property.

28. An arrangement according to any one of claims 16 to 27, in which the trigger signal sending device further comprises an encoding means and the trigger signal receiving device comprises a decoding means for encoding / decoding a code contained in the trigger signal (9), by which a specified article (1) is selected amongst a plurality of articles in order to send the time stop signal (10), the position of which is to be determined subsequently.

29. An arrangement according to any one of claims 16 to 28, in which the article (1) additionally comprises a first data sending device for sending further data from the article (1) to a first data receiving device provided on one of the receiving stations (2 to 5).

30. An arrangement according to any one of claims 16 to 29, in which one of the receiving stations (2 to 5) additionally comprises a second data sending device for sending further data to a second data receiving device provided at the article (1).

## Revendications

1. Procédé permettant de déterminer la position d'un objet (1), dans lequel :
a) pour la détermination de la position d'un objet (1) sur une courbe à une dimension, un signal d'arrêt de temps (10) est envoyé par l'objet (1) à au moins deux postes de réception (2-5) espacés l'un de l'autre dans l'espace, et, pour chaque autre dimension, à au moins un autre poste de réception (2-5) espacé des autres postes de réception (2-5),
b) un signal de mesure de temps est généré dans chaque poste de réception (2-5), les signaux de mesure de temps étant synchronisés entre eux,
c) pour chaque poste de réception (2-5) lors de la réception du signal d'arrêt de temps (10), une durée d'arrivée (11) pour le signal d'arrêt de temps (10) reçu est déterminée à partir du signal de mesure de temps, et
d) la position de l'objet (1) est déterminée à partir des positions des postes de réception (2-5) et des différences deux par deux de respectivement deux durées d'arrivée (11) de deux postes de réception (2-5),
avant chaque détermination de position
e) un signal de déclenchement (9) pour le déclenchement de l'envoi du signal d'arrêt de temps (10) est transmis à l'objet (1), l'objet (1) envoyant le signal d'arrêt de temps (10) dans une fenêtre de temps définie après réception du signal de déclenchement (9),
f) un signal de synchronisation (8) est transmis aux postes de réception (2-5) avant chaque détermination de position sous la forme d'un signal radio par un dispositif d'émission de signal de synchronisation (8), le signal de synchronisation (8) étant transmis pendant un certain temps avant le signal de déclenchement (99), et
g) la durée d'arrivée est déterminée dans le poste de réception (2-5) respectif comme différence de temps entre l'arrivée du signal de synchronisation (8) du dispositif d'émission de signal de synchronisation (2) et l'arrivée du signal d'arrêt de temps de l'objet (1) la durée de parcours respective du signal de synchronisation (8) du dispositif d'émission de signal de synchronisation (2) au poste de réception (2-5) respectif étant prise en considération pour la détermination de la durée d'arrivée dans le poste de réception (2-5) respectif et les durées de parcours étant déterminées à partir des positions connues des postes de réception (2-5) et du dispositif d'émission de signal de synchronisation (2).

2. Procédé selon la revendication 1, dans lequel pour la détermination de la position de l'objet (1) dans un plan dans lequel les postes de réception (2-5) se trouvent aussi, ou sur une courbe spatiale cintrée qui se trouve dans un plan avec les postes de réception (2-5), la position est déterminée à partir des points d'intersection d'hyperboles, chaque hyperbole étant associée à deux postes de réception (2-5), laquelle est orientée et disposée de telle manière que, à partir de chaque point sur l'hyperbole, la différence des deux éloignements respectivement du point aux deux postes de réception (2-5) associés corresponde toujours de manière identique à la différence deux à deux des deux durées d'arrivée (11) dans les deux postes de réception (2-5).

3. Procédé selon la revendication 1, dans lequel pour une détermination de la position en trois dimensions ou une détermination de la position sur une surface spatiale générale, la position est déterminée à partir des points d'intersection d'hyperboloïdes, chaque hyperboloïde étant associé à deux postes de réception (2-5), lequel est orienté et disposé de telle manière que, à partir d'un point sur l'hyperboloïde, la différence des deux éloignements respectivement aux deux postes de réception associés (2-5) corresponde toujours de manière identique à la différence deux à deux des deux durées d'arrivée (11) pour les deux postes de réception (2-5).

4. Procédé selon l'une quelconque des revendications précédentes, dans lequel, outre le nombre minimal requis de postes de réception (2-5), d'autres postes de réception (2-5) sont utilisés, lesquels sont disposés les uns par rapport aux autres de sorte qu'en cas de projections d'ombre dans les voies de transmission de l'objet (1) aux postes de réception (2-5) individuels, il y ait toujours le nombre minimal requis de postes de réception (2-5) pouvant recevoir.

5. Procédé selon la revendication 4, dans lequel d'autres postes de réception (2-5) additionnels sont utilisés et la position est déterminée à partir de toutes les durées d'arrivée (11) à l'aide d'évaluations statistiques.

6. Procédé selon la revendication 5, dans lequel, lors de l'évaluation statistique par un test de vraisemblance, des durées d'arrivée (11) sélectionnées sont écartées pour la détermination de la position.

7. Procédé selon l'une quelconque des revendications précédentes, dans lequel les postes de réception (2-5) sont déplacés dans leur position.

8. Procédé selon la revendication 7, dans lequel les positions des postes de réception (2-5) déplaçables sont déterminées par un système de positionnement par satellite tel que le GPS.

9. Procédé selon l'une quelconque des revendications précédentes, dans lequel le signal de synchronisation (8) et/ou le signal de déclenchement (9) est transmis par un poste de commande séparé positionné favorablement dans l'espace.

10. Procédé selon l'une quelconque des revendications précédentes, dans lequel le signal de synchronisation (8) et/ou le signal de déclenchement (9) est transmis par l'un des postes de réception (2-5).

11. Procédé selon l'une quelconque des revendications précédentes, dans lequel le signal de synchronisation (8) est transmis par un objet (1) après réception d'un signal de déclenchement (9) correspondant, dont la position a été déterminée précédemment.

12. Procédé selon l'une quelconque des revendications précédentes, dans lequel le signal d'arrêt de temps (10) comporte un groupe d'impulsions avec une réponse d'impulsion nette ou un signal avec une propriété caractéristique.

13. Procédé selon l'une quelconque des revendications précédentes, dans lequel le signal de déclenchement (9) comporte un code avec lequel un objet déterminé (1) est sélectionné parmi plusieurs objets pour l'émission du signal d'arrêt de temps (10), dont la position doit ensuite être déterminée.

14. Procédé selon l'une quelconque des revendications précédentes, dans lequel d'autres données sont envoyées par l'objet (1) à l'un des postes de réception (2-5) et/ou au poste de commande.

15. Procédé selon l'une quelconque des revendications précédentes, dans lequel d'autres données sont envoyées à l'objet (1) par l'un des postes de réception (2-5) et/ou le poste de commande.

16. Agencement permettant de déterminer la position d'un objet (1), comportant :
a) un dispositif d'émission disposé sur l'objet (1) pour l'envoi d'un signal d'arrêt de temps (10) ;
b) pour la détermination de la position d'un objet (1) sur une courbe à une dimension, au moins deux postes de réception (2-5) espacés l'un de l'autre dans l'espace pour la réception du signal d'arrêt de temps (10) émis par le dispositif d'émission, au moins un autre poste de réception (2-5) espacé des autres postes de réception (2-5) étant prévu pour chaque autre dimension, et chaque poste de réception (2-5) présentant ce qui suit :
b1) un compteur de temps pour la génération de signaux de mesure de temps qui sont synchronisés entre eux, et
b2) un moyen de détermination pour la détermination d'une durée d'arrivée (11) à partir du signal de mesure de temps lors de l'arrivée du signal d'arrêt de temps (10) ; et
c) un dispositif de calcul (6) pour la détermination de la position de l'objet (1) à partir des positions des postes de réception (2-5) et des différences deux à deux de deux durées d'arrivée (11) respectives de deux postes de réception (2-5),
**caractérisé par**
d) un dispositif d'émission de signal de synchronisation pour l'émission d'un signal de synchronisation (8) aux postes de réception (2-5), avec lequel les compteurs de temps sont synchronisés pour la génération des signaux de mesure de temps,
e) un dispositif d'émission de signal de déclenchement pour l'émission d'un signal de déclenchement (9) et un dispositif de commande pour la commande du dispositif d'émission de signal de déclenchement et du dispositif d'émission de signal de synchronisation, le moyen de commande commandant le dispositif d'émission de signal de déclenchement et le dispositif d'émission de signal de synchronisation de telle manière que le signal de synchronisation (8) soit émis un certain temps avant le signal de déclenchement (9),
e) un dispositif de réception de signal de synchronisation prévu aux postes de réception (2-5) pour la réception du signal de synchronisation (8) ainsi qu'un moyen de lancement qui y est prévu pour le lancement de la génération du signal de mesure de temps lors de la réception du signal de synchronisation (8), et
f) un dispositif de réception de signal de déclenchement prévu sur l'objet (1) pour la réception du signal de déclenchement (9) ainsi qu'un moyen de déclenchement qui y est prévu pour le déclenchement de l'émission du signal d'arrêt de temps (10) dans une fenêtre de temps définie après réception du signal de déclenchement (9),
g) le dispositif de calcul (6) étant de plus configuré de telle manière qu'il prenne en considération pour la détermination de la durée d'arrivée pour le poste de réception (2-5) respectif la durée de parcours du signal de synchronisation (8) du dispositif d'émission de signal de synchronisation (2) respectif au poste de réception (2-5) respectif, et détermine les durées de parcours à partir des positions connues des postes de réception (2-5) et du dispositif d'émission de signal de synchronisation (2).

17. Agencement selon la revendication 16, dans lequel le dispositif de calcul (6) est configuré pour une détermination de la position à deux dimensions de telle manière qu'il détermine pour la détermination de la position de l'objet (1) dans un plan dans lequel les postes de réception (2-5) se trouvent aussi, ou sur une courbe spatiale cintrée qui se trouve dans un plan avec les postes de réception (2-5), la position à partir des points d'intersection des hyperboles, chaque hyperbole étant associée à deux postes de réception (2-5), laquelle est orientée et disposée de telle manière que, à partir de chaque point sur l'hyperbole, la différence des deux éloignements respectivement du point aux deux postes de réception (2-5) associés corresponde toujours de manière identique à la différence deux à deux des deux durées d'arrivée (11) pour les deux postes de réception (2-5).

18. Agencement selon la revendication 16, dans lequel le dispositif de calcul (6) est configuré pour une détermination de la position en trois dimensions ou une détermination de la position sur une surface spatiale générale de telle manière qu'il détermine la position à partir des points d'intersection d'hyperboloïdes, respectivement un hyperboloïde étant associé à deux postes de réception (2-5), lequel est orienté et disposé de telle manière que, d'un point sur l'hyperboloïde, la différence des deux éloignements respectivement aux deux postes de réception (2-5) associés corresponde toujours de manière identique à la différence par paires des deux durées d'arrivée (11) pour les deux postes de réception (2-5).

19. Agencement selon l'une quelconque des revendications 16 à 18, qui est de plus configuré de telle manière qu'outre le nombre minimal requis de postes de réception (2-5), d'autres postes de réception (2-5) soient utilisés, lesquels sont disposés les uns par rapport aux autres de sorte qu'en cas de projections d'ombre dans les voies de transmission de l'objet (1) aux postes de réception (2-5) individuels, il y ait toujours le nombre minimal requis au moins de postes de réception (2-5) pouvant recevoir.

20. Agencement selon la revendication 19 qui est de plus configuré de telle manière que d'autres postes de réception (2-5) additionnels soient prévus, le dispositif de calcul (6) étant configuré de telle manière qu'il détermine la position à partir de toutes les durées d'arrivée (11) à l'aide d'évaluations statistiques.

21. Agencement selon la revendication 20, dans lequel le dispositif de calcul (6) est configuré de telle manière qu'il écarte des durées d'arrivée sélectionnées (11) pour la détermination de la position lors de l'évaluation statistique par un test de vraisemblance.

22. Agencement selon l'une quelconque des revendications 16 à 21, qui comporte des postes de réception (2-5) déplaçables dans leur position.

23. Agencement selon la revendication 22, dans lequel les postes de réception (2-5) déplaçables présentent des systèmes de positionnement par satellite tels que des récepteurs GPS, à l'aide desquels leur position est déterminée.

24. Agencement selon l'une quelconque des revendications 16 à 23, dans lequel un poste de commande séparé est prévu, lequel comporte le dispositif d'émission de signal de déclenchement, le dispositif d'émission de signal de synchronisation, le dispositif de commande et le dispositif de calcul.

25. Agencement selon l'une quelconque des revendications 16 à 23, dans lequel l'un des postes de réception (2-5) comporte le dispositif d'émission de signal de déclenchement, le dispositif de transmission de signal de synchronisation et le dispositif de commande.

26. Agencement selon l'une quelconque des revendications 16 à 23, dans lequel l'un des plusieurs objets (1) comporte le dispositif de transmission de signal de synchronisation.

27. Agencement selon l'une quelconque des revendications 16 à 26, dispositif de mise en forme lequel le dispositif d'émission présente un formateur d'impulsions pour la réalisation du signal d'arrêt de temps (10) comme un groupe d'impulsions avec une réponse d'impulsion nette ou comme un signal avec une propriété caractéristique.

28. Agencement selon l'une quelconque des revendications 16 à 27, dans lequel le dispositif d'émission de signal de déclenchement comporte de plus un moyen de codage et le dispositif de réception de signal de déclenchement comporte un moyen de décodage pour le codage/décodage d'un code contenu dans le signal de déclenchement (9), avec lequel un objet déterminé (1) est sélectionné parmi plusieurs objets pour l'émission du signal d'arrêt de temps (10), dont la position doit ensuite être déterminée.

29. Agencement selon l'une quelconque des revendications 16 à 28, dans lequel l'objet (1) comporte de plus un premier dispositif d'émission de données pour l'émission d'autres données de l'objet (1) à un premier dispositif de réception de données prévu sur l'un des postes de réception (2-5).

30. Agencement selon l'une quelconque des revendications 16 à 29, dans lequel l'un des postes de réception (2-5) comporte de plus un deuxième dispositif d'émission de données pour l'émission d'autres données à un deuxième dispositif de réception de données prévu près de l'objet (1).
